# EUROPEAN PATENT APPLICATION

(11) **EP 4 523 780 A1**
(43) Date of publication of application: **19.03.2025**
(21) Application number: 23803652.9
(22) Date of filing: 12.01.2023
(51) Int. Cl.: B01D 69/12, B01D 69/10, C02F 1/44, B01D 61/02, B01D 71/56, B01D 67/00, C02F 101/16

(54) **WATER TREATMENT SEPARATION MEMBRANE WITH IMPROVED NITRATE NITROGEN REMOVAL ABILITY, MANUFACTURING METHOD THEREFOR, AND SEPARATION MEMBRANE MODULE COMPRISING SAME**

(30) Priority: 11.05.2022 KR 20220057683
(71) Applicant: Toray Advanced Materials Korea Inc., Gumi-si, Gyeongsangbuk-do 39389 (KR)
(72) Inventor: PARK, Hyunggyu, Gumi-si, Gyeongsangbuk-do 39389 (KR)
(74) Representative: Kraus & Lederer PartGmbB
(86) International application number: PCT/KR2023/000538
(87) International publication number: WO 2023/219223

(57) **Abstract**

The present invention relates to a water treatment membrane, and more particularly, to a household water treatment membrane, which has an excellent nitrate nitrogen removal rate for raw water with high hardness component by introducing a bulky sulfonic acid group having a high surface negative charge concentration, a method of manufacturing the same, and a membrane module including the same.

## Description

### BACKGROUND

### 1. Field of the Invention

The present invention relates to a water treatment membrane, and more particularly, to a household water treatment membrane, which has an excellent nitrate nitrogen removal rate for raw water with a high hardness component by introducing a bulky sulfonic acid group having a high surface negative charge concentration, a method of manufacturing the same, and a membrane module including the same.

### 2. Discussion of Related Art

Generally, methods for separating various components such as fine impurities and ions present in a liquid include evaporation, electrodialysis, microfiltration, ultrafiltration, and reverse osmosis. Among these, reverse osmosis has advantages of low energy consumption, being able to establish small- and large-scale facilities, and removal of monovalent ions in water.

Generally, a membrane used in reverse osmosis is either a nano membrane or a reverse osmosis membrane, wherein the reverse osmosis membrane is composed of a support layer for maintaining mechanical strength and an active layer having selective permeability, and recently, a reverse osmosis membrane composed of aromatic polysulfone as a porous support layer and polyamide as an active layer is being developed and commercialized. Methods for manufacturing the reverse osmosis membrane may include a thin layer dispersion method, a dip coating method, a vapor deposition method, a Langmuir-Blodgett method, and an interfacial polymerization method. The most widely used method is an interfacial polymerization method disclosed by Cadotte (U.S. Patent No.4,277,344). The above present invention discloses a technology related to an aromatic polyamide composite membrane that is obtained by interfacial polymerization of an aromatic multifunctional amine containing at least two primary amine substituents and an aromatic acyl halide having at least three acyl halide substituents.

However, the reverse osmosis membrane obtained by the-mentioned interfacial polymerization method inevitably has an unreacted acyl halide substituent remaining on the surface of the reverse osmosis membrane after the end of the reaction, and the residual acyl halide substituent is hydrolyzed through a water washing process after interfacial polymerization and is converted into a carboxylic acid group. This mechanism may be explained as the reason why the surface of a common polyamide reverse osmosis membrane has a negative charge. Such a surface negative charge property causes the high accumulation of divalent ions on the membrane surface due to electrostatic attraction especially when treating raw water containing a high concentration of divalent cation component, and ultimately causes a decrease in nitrate nitrogen removal rate.

### SUMMARY OF THE INVENTION

The present invention is directed to a reverse osmosis membrane, which is able to prevent or minimize a decrease in nitrate nitrogen removal rate of a reverse osmosis membrane by minimizing the accumulation of a hardness component generated during the treatment of raw water containing a high concentration of hardness component in the reverse osmosis membrane, a method of manufacturing the same, and a membrane module including the same.

According to an aspect of the present invention, there is provided a water treatment membrane, which includes a porous support; and a separation functional layer formed on at least one surface of the porous support.

**In** an exemplary embodiment of the present invention, the thickness of the porous support among the components of the water treatment membrane of the present invention may be 100 to 500 µm, and the pore size of the porous support may be 1 to 500 nm.

**In** an exemplary embodiment of the present invention, the surface of the separation functional layer among the components of the water treatment membrane of the present invention may include a functional group derived from sulfonic acid represented by Formula 1 below:

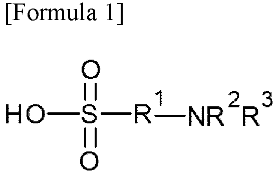

In Formula 1, R¹ is a C₂ to C₅ linear alkylene group or a C₃ to C₇ branched alkylene group, and R² and R³ are each independently a hydrogen atom or a C₁ to C₃ linear alkyl group.

In an exemplary embodiment of the present invention, the surface of the separation functional layer among the components of the water treatment membrane of the present invention may include a polyamide layer; and a negative charge property improvement layer formed on the polyamide layer.

In an exemplary embodiment of the present invention, the negative charge property improvement layer may be formed by a negative charge property-improving coating agent, which includes an amine compound including the sulfonic acid represented by Formula 1 and water.

In an exemplary embodiment of the present invention, the negative charge property-improving coating agent may include 0.010 to 0.200 wt% of the sulfonic acid-containing amine compound represented by Formula 1, and water as the remainder among the total wt%.

In an exemplary embodiment of the present invention, the water treatment membrane of the present invention may have an S⁻ concentration of 0.18 to 0.75 at% when the surface of the separation functional layer is analyzed by XPS.

In an exemplary embodiment of the present invention, in the water treatment membrane of the present invention, the surface charge of the separation functional layer may satisfy -30.5 to -42.3 mV at pH 6 to 8.

In an exemplary embodiment of the present invention, in the water treatment membrane of the present invention, the nitrate nitrogen removal rate for potable water that includes 500 to 700 ppm of a hardness-causing material and 15 to 45 ppm of nitrate nitrogen may be 76.0% or more.

In an exemplary embodiment of the present invention, the water treatment membrane of the present invention may be a reverse osmosis membrane or nano membrane.

According to another aspect of the present invention, there is provided a method of manufacturing the above-described water treatment membrane, which includes: a first step of coating at least one surface of a porous support with a multifunctional amine aqueous solution; a second step of coating the top surface coated with the multifunctional amine aqueous solution with an amine-reactive reactant aqueous solution and performing an interfacial polymerization reaction; a third step of removing an excess solution by blowing air onto the porous support subjected to the second step; a fourth step of forming a primary coating film on at least one surface of the porous support by performing a thermal crosslinking process on the porous support subjected to the third step at a high temperature; and a fifth step of forming a secondary coating film on the primary coating film by coating and reacting a negative charge property-improving coating agent on the primary coating film.

In an exemplary embodiment of the present invention, the manufacturing method of the present invention may further include a sixth step of removing a residual acid and/or unreacted material on the surface of the secondary coating film after the fifth step.

According to still another aspect of the present invention, there is provided a membrane module including the above-described water treatment membrane.

According to yet another aspect of the present invention, there is provided a household water purifier using the membrane module.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

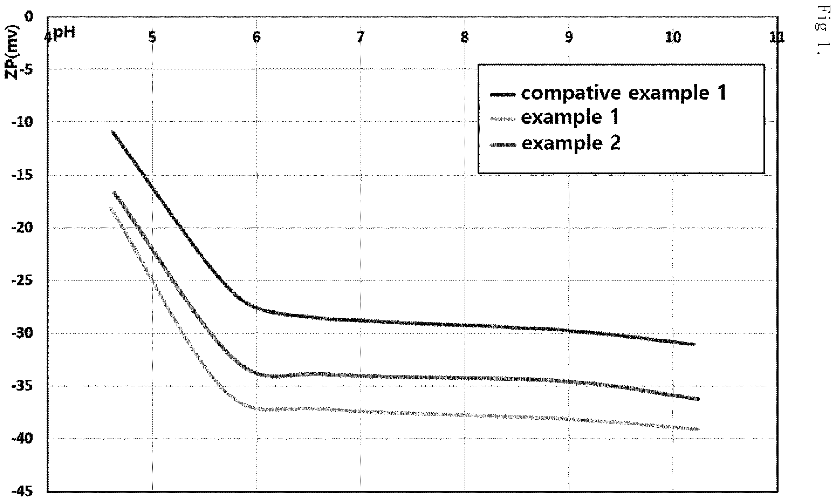

FIG. 1 is a surface charge measurement graph for reverse osmosis membranes of Examples 1 and 2 and Comparative Example 1 according to Experimental Example 4.

### DETAILED DESCRIPTION OF EXEMPLARY EMBODIMENTS

The water treatment membrane set forth in the present invention encompasses reverse osmosis membranes and nano filtration membranes.

Among Korean reverse osmosis (RO) water purifier certification items, a nitrate nitrogen test is performed with potable water and/or municipal water containing a high hardness component at approximately 600 ppm, and under this high hardness condition, a nitrate nitrogen removal rate significantly decreases due to the charge screening effect on the surface of a reverse osmosis membrane and a mechanism of a charge-induced pore size enlargement.

The present invention relates to a reverse osmosis membrane in which a decrease in nitrate nitrogen removal rate is prevented and a nitrate nitrogen removal rate is improved by minimizing the accumulation of a divalent cationic hardness component on the surface of a water treatment membrane, and is a reverse osmosis membrane in which the surface negative charge property of a sulfonic acid-derived functional group having a bulky structure on the surface of the water treatment membrane is reinforced, and a decrease in nitrate nitrogen removal rate is ultimately minimized.

The water treatment membrane of the present invention includes a porous support; and a separation functional layer formed on at least one surface of the porous support.

In the present invention, the porous support is a typical microporous support, but is not particularly limited thereto. The pore size should be large enough to allow permeate water to pass through and not large enough to interfere with the formation of a thin film on the porous support.

The thickness of the porous support satisfying the above appropriate permeability may be 100 to 500 µm, and the pore size of the porous support may be 1 to 500 nm, and the thickness of the porous support is preferably 100 to 400 µm, and the pore size of the porous support is 10 to 450 nm, and more preferably, 50 to 400 nm. Here, when the thickness of the porous support is less than 100 µm, although a permeate flow rate is good, the physical strength of the membrane decreases, so there may be a problem of defects generated by damage to the membrane during a post-processing process, and a problem of water treatment membrane deformation during operation. In addition, when the thickness of the porous support is more than 500 µm, since an ultra-thin film collapses into pores, it may be difficult to form a desired flat sheet-type structure, and the permeate flow rate of the membrane may be greatly reduced. In addition, when the pore size is more than 500 nm, the permeate flow rate is good, but fouling removal ability may be reduced.

In addition, the porous support may include a non-woven fabric; and a porous polymer layer, and may be manufactured by casting the porous polymer resin on the non-woven fabric.

The non-woven fabric may be used without limitation as long as it can be a non-woven fabric with specifications that can be commonly used in the art, and is preferably a non-woven fabric formed of polyester, polyethylene, or a polypropylene. The thickness of the non-woven fabric may be 30 to 300 µm, and preferably 50 to 200 µm, but the present invention is not limited thereto.

The porous polymer layer may be a porous polymer layer formed of a material that can be commonly used, and is preferably formed of one or more selected from a polyester resin, a polysulfone resin, a polyether sulfone resin, a polyimide resin, a polypropylene resin, and a polyvinylidene fluoride resin, and the average thickness of the porous polymer layer may be 10 to 200 µm, and preferably, 30 to 190 µm. When the average thickness of the porous polymer layer is outside the above range, due to low water permeability, it may be difficult to increase the effect.

The separation functional layer is formed on at least one surface of the porous support, and the surface of the separation functional layer includes a functional group derived from a sulfonic acid-containing amine compound represented by Formula 1 below.

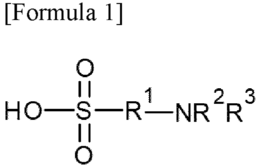

In Formula 1, R¹ may be a C₂ to C₅ linear alkylene group or a C₃ to C₇ branched alkylene group, is preferably a C₂ to C₅ linear alkylene group, and is more preferably a C₂ to C₃ linear alkylene group. In addition, R² and R³ of Formula 1 are each independently a hydrogen atom or a C₁ to C₃ linear alkyl group, preferably a hydrogen atom or a methyl group, and more preferably a hydrogen atom.

The separation functional layer may have a bilayer structure that includes a polyamide layer; and a negative charge property improvement layer formed on the polyamide layer. To explain its structure in further detail, it is a structure in which the polyamide layer is formed on at least one surface of the porous support, and the negative charge property improvement layer is formed on the polyamide layer.

The polyamide layer is a layer that is formed of a polyamide compound formed by interfacial polymerization of a multifunctional amine and an amine-reactive reactant.

The multifunctional amine may include an aromatic diamine, and preferably includes one or more selected from metaphenyldiamine, paraphenylenediamine, orthophenylenediamine, 1,3,5-triaminobenzene, para-xylylenediamine, and diaminopyripine.

In addition, the amine-reactive reactant may include one or two or more multifunctional acid halogen compounds selected from a multifunctional acyl halide, a multifunctional sulfonyl halide, and a multifunctional isocyanate, and preferably, the multifunctional acid halogen compounds are essentially monomeric, aromatic, and multifunctional acyl halides. Examples of the multifunctional acid halogen compounds are di- or tri-carboxylic acid halides such as trimesoyl chloride (TMC), isophthaloyl chlroide (IPC), terephthaloyl chloride (TPC), and/or mixtures thereof.

The thickness of the polyamide layer may be 0.1 to 0.5 µm, and preferably 0.2 to 0.3 µm. When the thickness of the polyamide layer is less than 0.1 µm, the nitrate nitrogen removal rate is not good, and when the thickness of the polyamide layer is more than 0.5 µm, there is a problem of a reduced permeate water volume, so it is preferable that the polyamide layer in the separation functional layer is formed to have a thickness within the above range.

Next, the negative charge property improvement layer serves to introduce a functional group derived from the sulfonic acid represented by Formula 1 on the surface of the polyamide layer, that is, the surface of a water treatment membrane, and due to the increase in negative charge concentration and the introduction of a bulky sulfonic acid group on the surface of the water treatment membrane, the negative charge property improvement layer serves to prevent and reduce a charge screening effect and a charge-induced pore size enlargement phenomenon by the accumulation of a divalent hardness component on the membrane surface.

The negative charge property improvement layer is formed of a negative charge property-improving coating agent, which includes the sulfonic acid-containing amine compound represented by Formula 1, and when the negative charge property improvement layer is formed, the sulfonic acid reacts with an unreacted amine-reactive reactant, and preferably, an unreacted acyl halide group, of the polyamide layer, the charge property of the surface of the reverse osmosis membrane is changed. Generally, when an amine-reactive reactant such as an acyl halide remaining on the membrane surface after forming the polyamide layer is hydrolyzed, a carboxylic acid group is formed. In the present invention, as a sulfonic acid group having a bulky structure due to a carboxylic acid group having a larger molecular weight is introduced and a linear chain region is included in the middle part between the amine and the sulfonic acid group of the polyamide layer, the present invention serves as a brush that interferes with the adsorption of divalent cations on the membrane surface.

The negative charge property-improving coating agent may include 0.010 to 0.200 wt% of the sulfonic acid-containing amine compound represented by Formula 1 and the remainder as water among the total wt%, preferably includes 0.015 to 0.150 wt% of the sulfonic acid-containing amine compound represented by Formula 1 and the remainder as water among the total wt%, and more preferably includes 0.020 to 0.100 wt% of the sulfonic acid-containing amine compound represented by Formula 1 and the remainder as water among the total wt%.

Here, when the content of the sulfonic acid-containing amine compound in the negative charge property-improving coating agent is less than 0.010 wt%, due to the formation of less functional groups on the surface of the water treatment membrane, the charge screening effect may be minimal or absent and the effect of preventing the charge-induced pore size enlargement phenomenon caused by the accumulation of a divalent hardness component on the membrane surface may be minimal or absent, and when the content of the sulfonic acid-containing amine compound is more than 0.200 wt%, the thickness of the secondary coating layer becomes too thick, so there may be a problem of a reduced permeate water volume.

A method of manufacturing such a water treatment membrane of the present invention is as follows:
a first step of coating at least one surface of a porous support with a multifunctional amine aqueous solution; a second step of coating the top surface coated with the multifunctional amine aqueous solution with an amine-reactive reactant aqueous solution and performing an interfacial polymerization reaction; a third step of removing an excess solution by blowing air onto the porous support subjected to the second step; a fourth step of forming a primary coating film on at least one surface of the porous support by performing a thermal crosslinking process on the porous support subjected to the third step at a high temperature; and a fifth step of forming a secondary coating film on the primary coating film by coating and reacting a negative charge property-improving coating agent on the primary coating film.

The multifunctional amine aqueous solution in the first step may include a multifunctional amine, an additive, and water.

The multifunctional amine may include one or more selected from metaphenyldiamine, paraphenylenediamine, orthophenylenediamine, 1,3,5-triaminobenzene, para-xylylenediamine, and diaminopyripine. In addition, the content of the multifunctional amine may be 0.1 to 10 wt%, preferably, 0.3 to 6.0 wt%, and more preferably, 0.3 to 3 wt% of the total weight of the multifunctional amine aqueous solution. When the content is outside the above range, there may be a problem of an abrupt decrease in flow rate.

In addition, the additive may include one or more selected from ethylhexanediol (EHD), tetramethylhexadiamine (TMHD), and toluenesulfonic acid (TSA), preferably includes two or more selected from EHD, TMHD and TSA, more preferably includes three or more selected from EHD, TMHD and TSA, and even more preferably includes EHD, TMHD, and TSA in a weight ratio of 1 : 5.5 to 6.5 : 6.0 to 6.8.

The content of the additive in the multifunctional amine aqueous solution may be 0.001 to 6.000 wt%, preferably 0.1 to 5.0 wt%, and more preferably, 0.5 to 4.5 wt% of the total weight of the aqueous solution. When the content of the additive is outside the above range, the permeate flow rate may be reduced, or the degree of polymerization may decrease, reducing a salt removal rate.

The coating in the first step may be performed by various methods such as soaking, impregnating, and coating, and the excess solution after application may be removed from the support using rolling, a sponge, an air knife, or another suitable means

Next, the amine-reactive reactant aqueous solution in the second step may include an amine-reactive reactant; and an organic solvent, wherein the amine-reactive reactant, as described above, may include one or two or more multifunctional acid halogen compounds selected from a multifunctional acyl halide, a multifunctional sulfonyl halide and a multifunctional isocyanate, and preferably, the multifunctional acid halogen compounds are essentially monomeric, aromatic, and multifunctional acyl halides. Examples of the multifunctional acid halogen compounds are di- or tri-carboxylic acid halides such as trimesoyl chloride (TMC), isophthaloyl chloride (IPC), terephthaloyl chloride (TPC), and/or mixtures thereof.

In addition, the content of the amine-reactive reactant in the amine-reactive reactant aqueous solution may be 0.005 to 5 wt%, and preferably, 0.01 to 0.5 wt%. Here, when the content of the amine-reactive reactant is less than 0.005 wt%, the polyamide layer is not formed well, and when the content of the amine-reactive reactant is more than 5 wt%, since a large amount of unreacted amine-reactive reactant that has not reacted with the multifunctional amine is generated, it is preferable to include the amine-reactive reactant within the above range.

In addition, the organic solvent may include one or more selected from halogenated hydrocarbons such as hexane, cyclohexane, heptane, C₈ to C₁₂ alkanes, and Freon, and preferably, C₈ to C₁₂ alkanes and mixed solvents thereof.

The coating in the second step is performed by various methods such as soaking, impregnating, and coating, and after coating, an interfacial polymerization reaction is induced for 5 seconds to 10 minutes, and preferably 20 seconds to 4 minutes.

Next, the blowing treatment in the third step may be performed by a blowing treatment method generally used in the art. As a preferable example, air may be sprayed onto the porous support that has been subjected to the second step under a pressure of 0.1 to 1.0 bar, and preferably, 0.3 to 0.8 bar, for 5 to 20 seconds, and preferably, 10 to 15 seconds, to remove an excess organic solution.

In addition, the third step may further include drying the porous support from which an excess organic solution is removed at room temperature for 60 to 120 seconds, and preferably, for 70 to 110 seconds.

Next, the thermal crosslinking in the fourth step may be performed at 40 to 80 °C, and preferably 50 to 70 °C, for 30 seconds to 20 minutes, and preferably, 50 seconds to 10 minutes.

Next, the fifth step is a process of forming a secondary coating film (or negative charge property-improving coating layer) on the primary coating film (or polyamide layer), and the composition and composition ratio of the negative charge property-improving coating agent are the same as described above.

When the surface of the water treatment membrane (the surface of the separation functional layer) of the present invention manufactured by the above method is analyzed by XPS, the concentration of S may be 0.18 to 0.75 at%, preferably 0.30 to 0.71 at%, and more preferably 0.35 to 0.65 at%.

In addition, in the water treatment membrane of the present invention, the surface charge of the separation functional layer may satisfy -30.5 to -42.3 mV, preferably -31.0 to -42.0 mV, and more preferably -32.5 to -38.5 mV at pH 6 to 8.

In addition, the water treatment membrane of the present invention may have a nitrate nitrogen removal rate of 76.0% or more, preferably 78.0% or more, and more preferably 80% to 90% for potable water that includes 500 to 700 ppm of a hardness-causing material and 15 to 45 ppm of nitrate nitrogen.

Hereinafter, the present invention will be described with reference to the following examples. Here, the following examples are merely provided to exemplify the present invention, and the claims of the present invention are not limited by the following examples.

### [Examples]

### Preparation Example 1 : Preparation of multifunctional amine aqueous solution

A multifunctional amine aqueous solution was prepared by mixing 1.1 wt% of meta-phenylenediamine (MPD) as a multifunctional amine compound, 0.2 wt% of ethyl-hexanediol as an additive, 1.2 wt% of tetramethyl hexane diamine (TMHD), 1.32 wt% of toluene sulfonic acid (TSA), and water as the remainder.

### Preparation Example 2: Preparation of amine-reactive reactant aqueous solution

An amine-reactive reactant aqueous solution that includes 0.1 wt% of trimesoyl chloride (TMC) and 0.03 wt% of isophthaloyl chloride (IPC) as amine-reactive reactants, and a cyclohexane solvent (organic solvent) as the remainder was prepared.

### Preparation Example 3-1: Preparation of negative charge property-improving coating agent

A negative charge property-improving coating agent was prepared by mixing 0.025 wt% of a sulfonic acid-containing amine compound represented by Formula 1-1 below and water as the remainder.

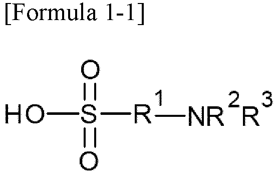

In Formula 1-1, R¹ is an ethylene group, and R² and R³ are hydrogen atoms.

### Preparation Example 3-2: Preparation of negative charge property-improving coating agent

A negative charge property-improving coating agent was prepared by mixing 0.025 wt% of a sulfonic acid-containing amine compound represented by Formula 1-2 and water as the remainder.

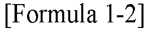

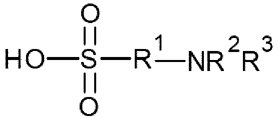

In Formula 1-2, R¹ is a linear propylene group, and R² and R³ are hydrogen atoms.

### Example 1 : Manufacture of reverse osmosis membrane

A porous support in which a 140 µm-thick porous polysulfone layer casted on a non-woven fabric having an average thickness of 100 µm was formed was prepared. In addition, the pore size of the porous support was 40 to 60 nm.

Next, after immersing the porous support in the multifunctional amine aqueous solution prepared in Preparation Example 1 for 40 seconds and then taking it out, the porous support coated with the amine aqueous solution was immersed in the amine-reactive reactant aqueous solution prepared in Preparation Example 2 for 1 minute to perform interfacial polymerization.

Afterward, after taking the porous support out, an excess organic solvent was removed by spraying air at 0.5 bar for 10 seconds and then dried at 25 °C for 1.5 minutes, thereby forming a coating layer on the surface of the porous support, and the resulting porous support was thermally crosslinked at 60 °C for 2 minutes, thereby forming a primary coating film (polyamide layer).

Thereafter, a second coating film (negative charge property-improving coating layer) was formed by coating the surface of the porous support on which the primary coating film was formed with an aqueous solution including the negative charge property-improving coating agent prepared in Preparation Example 3-1 through spraying and drying it.

Subsequently, a reverse osmosis membrane was manufactured by immersing the resulting porous support in a solution containing 0.2 wt% of sodium carbonate for 2 hours to remove an acid and/or unreacted residues.

### Example 2 : Manufacture of reverse osmosis membrane

A reverse osmosis membrane was manufactured by the same method, conditions and materials as in Example 1, except that a reverse osmosis membrane was manufactured using the negative charge property-improving coating agent of Preparation Example 3-2 instead of the negative charge property-improving coating agent of Preparation Example 3-1.

### Comparative Example 1

A porous support in which a 140 µm-thick porous polysulfone layer casted on non-woven fabric having an average thickness of 100 µm was formed was prepared. In addition, the pore size of the porous support was 40 to 60 nm.

Next, after immersing the porous support in the multifunctional amine aqueous solution prepared in Preparation Example 1 for 40 seconds and then taking it out, the porous support coated with the amine aqueous solution was immersed in the amine-reactive reactant aqueous solution prepared in Preparation Example 2 for 1 minute to perform interfacial polymerization.

Afterward, after taking the porous support out, an excess organic solvent was removed by spraying air at 0.5 bar for 10 seconds and then dried at 25 °C for 1.5 minutes, thereby forming a coating layer on the surface of the porous support, and the resulting porous support was thermally crosslinked at 60 °C for 2 minutes, thereby forming a primary coating film (polyamide layer).

Subsequently, a reverse osmosis membrane was manufactured by immersing the resulting porous support in a solution containing 0.2 wt% of sodium carbonate for 2 hours to remove an acid and/or unreacted residues.

### Examples 3 to 6 and Comparative Examples 2 and 3

Reverse osmosis membranes were manufactured in the same manner as in Example 1, and Examples 3 to 5 and Comparative Examples 2 to 3 were performed by manufacturing reverse osmosis membranes in which a negative charge property-improving coating layer was formed by changing the type and content of sulfonic acid in a negative charge property-improving coating agent, respectively, as shown in Table 1 below.

**[Table 1]**

| Classification | Multifunctional amine aqueous solution | Amine-reactive reactant aqueous solution | Negative charge property-improving coating agent | |
|---|---|---|---|---|
| | | | Type of sulfonic acid | Content of sulfonic acid-containing amine compound (wt%) |
| Example 1 | Preparation Example 1 | Preparation Example 2 | Formula 1-1 | 0.025 |
| Example 2 | Preparation Example 1 | Preparation Example 2 | Formula 1-2 | 0.025 |
| Example 3 | Preparation Example 1 | Preparation Example 2 | Formula 1-1 | 0.010 |
| Example 4 | Preparation Example 1 | Preparation Example 2 | Formula 1-1 | 0.100 |
| Example 5 | Preparation Example 1 | Preparation Example 2 | Formula 1-1 | 0.150 |
| Example 6 | Preparation Example 1 | Preparation Example 2 | Formula 1-2 | 0.100 |
| Comparative Example 1 | Preparation Example 1 | Preparation Example 2 | - | - |
| Comparative | Preparation | Preparation | Formula 1-1 | 0.005 |
| Example 2 | Example 1 | Example 2 | | |
| Comparative Example 3 | Preparation Example 1 | Preparation Example 2 | Formula 1-1 | 0.205 |

### Experimental Example 1: Evaluation of flow rate and salt removal rate

To evaluate the performance of the reverse osmosis membranes, the permeate flow rates and salt removal rates of the reverse osmosis membranes manufactured according to the examples and comparative examples were measured in a 200-ppm sodium chloride (NaCl) aqueous solution under conditions of pH 7, 25 °C and 60 psi. The results are shown in Table 2.

### Experimental Example 2 : Evaluation of nitrate nitrogen removal rate

To evaluate the performance of the reverse osmosis membranes, for the reverse osmosis membranes manufactured according to the examples and comparative examples, permeate flow rates and salt removal rates were measured for potable water containing 30 ppm of nitrate nitrogen (Condition 1) and potable water with raw water conditions (nitrate nitrogen 30 ppm + hardness 600 ppm) for a nitrate nitrogen certification test (Condition 2) at 25 °C and 50 psi, respectively, and the results are shown in Table 2.

### Experimental Example 3 : Measurement of S⁻ content on surface of reverse osmosis membrane

The S⁻ contents on the surface of the reverse osmosis membranes manufactured in the examples and comparative examples were measured using X-ray photoelectron spectroscopy (XPS), and the results are shown in Table 2 below.

### Experimental Example 4 : Measurement of surface charge

To analyze the surface properties of a reverse osmosis membrane using an electrokinetic analyzer (Anton Paar), the surface zeta potentials of the reverse osmosis membranes manufactured according to the examples and comparative examples were measured. The measured values are shown in Table 2 below and FIG. 1.

**[Table 2]**

| Classification | Flow rate (GFD) | Salt removal rate (%) | Nitrate nitrogen removal rate (%) | | S content on surface (at%) | Surface charge of membrane (mV, pH 7) |
|---|---|---|---|---|---|---|
| | | | Condition 1 | Condition 2 | | |
| Example 1 | 30.5 | 98.4 | 96.1 | 80.0 | 0.45 | -37.2 ~ - 38.0 |
| Example 2 | 29.7 | 98.1 | 97.5 | 83.2 | 0.37 | -33.9 ~ - 34.56 |
| Example 3 | 31.5 | 97.4 | 93.1 | 78.1 | 0.19 | -31.1 ~ - 32.3 |
| Example 4 | 25.7 | 98.8 | 98.1 | 81.9 | 0.71 | -40.1 ~ - 41.9 |
| Example 5 | 24.1 | 98.9 | 97.7 | 83.8 | 0.88 | -41.4 ~ - 42.2 |
| Example 6 | 24.9 | 98.7 | 98.0 | 81.7 | 0.64 | -38.9 ~ - 40.4 |
| Comparative Example 1 | 31.5 | 95.4 | 90.7 | 66.0 | 0 | -28.4 ~ - 29.7 |
| Comparative Example 2 | 31.2 | 97.2 | 93.4 | 73.1 | 0.10 | -30.4 ~ - 30.8 |
| Comparative Example 3 | 21.5 | 99.0 | 97.5 | 84.1 | 1.04 | -43.1 ~ - 44.9 |

As seen in Table 1 and FIG. 1, Examples 1 to 6 according to the present invention showed excellent nitrate nitrogen removal rates in high-hardness potable water. In contrast, compared with Examples 1 to 6, it can be confirmed that Comparative Example 1 has a significantly low reduction in nitrate nitrogen removal rate under a raw water condition containing a high concentration of hardness component.

**In** addition, in the case of Comparative Example 2 using a negative charge property-improving coating agent containing less than 0.010 wt% of the sulfonic acid-containing amine compound, since the treatment concentration of the amine compound containing a sulfonic acid group was excessively low, the XPS analysis results for the surface of the final membrane showed that the S content was less than 0.18 at% and the effect of improving a nitrate nitrogen removal rate was significantly low.

**In** addition, Comparative Example 3 in which the S⁻ content exceeded 0.75 at% by treating an excessive concentration of amine compound containing a sulfonic acid group exhibited an excellent nitrate nitrogen removal rate, but showed an abrupt reduction in water permeation of the entire membrane due to an excessive increase in thickness of the secondary coating layer.

The water treatment membrane of the present invention can minimize the charge screening effect on the surface of a reverse osmosis membrane generated by the treatment of raw water containing a high hardness component and a decrease in nitrate nitrogen removal rate generated by a mechanism of a charge-induced pore size enlargement, and when a water purifier system is designed using the same, a water purification system that can set more economical operating conditions by increasing the design margin of operating factors directly affecting the removal rate, such as an operating pressure and a recovery rate, can be provided.

Although embodiments of the present invention have been described above, the spirit of the present invention is not limited thereto, and it will be understood by those of ordinary skill in the art that the present invention may be modified and altered in various ways by adding, altering, or deleting components without departing from the spirit of the present invention defined in the appended claims, and such modifications and alterations will also be included in the scope of the present invention.

## Claims

1. A water treatment membrane with an improved nitrate nitrogen removal rate, comprising:
a porous support; and a separation functional layer formed on at least one surface of the porous support,
wherein, when the surface of the separation functional layer is analyzed by XPS, the S⁻ concentration is 0.18 to 0.75 at%,
the surface charge of the separation functional layer is -30.5 to -42.3 mV at pH 6 to 8, and
the nitrate nitrogen removal rate for potable water that includes 500 to 700 ppm of a hardness-causing material and 15 to 45 ppm of nitrate nitrogen is 76.0% or more.

2. The water treatment membrane of claim 1, wherein the thickness of the porous support is 100 to 500 µm, and the pore size of the porous support is 1 to 500 nm.

3. The water treatment membrane of claim 1, wherein the surface of the separation functional layer includes a functional group derived from a sulfonic acid represented by Formula 1 below: 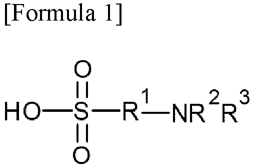 in Formula 1, R¹ is a C₂ to C₅ linear alkylene group or a C₃ to C₇ branched alkylene group, and R² and R³ are each independently a hydrogen atom or a C₁ to C₃ linear alkyl group.

4. The water treatment membrane of claim 1, wherein the separation functional layer includes a polyamide layer; and a negative charge property improvement layer formed on the polyamide layer.

5. The water treatment membrane of claim 4, wherein the negative charge property improvement layer is formed by a negative charge property-improving coating agent that includes a sulfonic acid-containing amine compound represented by Formula 1 below and water: 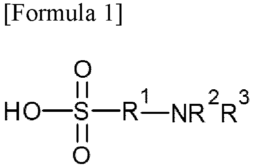 in Formula 1, R¹ is a C₂ to C₅ linear alkylene group or a C₃ to C₇ branched alkylene group, and R² and R³ are each independently a hydrogen atom or a C₁ to C₃ linear alkyl group.

6. The water treatment membrane of claim 5, wherein the negative charge property-improving coating agent includes 0.010 to 0.200 wt% of the sulfonic acid-containing amine compound represented by Formula 1, and water as the remainder among the total wt%.

7. A method of manufacturing a water treatment membrane with an improved nitrate nitrogen removal rate, comprising:
a first step of coating at least one surface of a porous support with a multifunctional amine aqueous solution;
a second step of coating the top surface coated with the multifunctional amine aqueous solution with an amine-reactive reactant aqueous solution and performing an interfacial polymerization reaction;
a third step of removing an excess solution by blowing air onto the porous support subjected to the second step;
a fourth step of forming a primary coating film on at least one surface of the porous support by performing a thermal crosslinking process on the porous support subjected to the third step at a high temperature; and
a fifth step of forming a secondary coating film on the primary coating film by coating and reacting a negative charge property-improving coating agent on the primary coating film,
wherein the negative charge property-improving coating agent includes a sulfonic acid-containing amine compound represented by Formula 1 below and water: 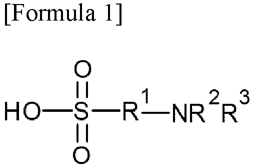
in Formula 1, R¹ is a C₂ to C₅ linear alkylene group or a C₃ to C₇ branched alkylene group, and R² and R³ are each independently a hydrogen atom or a C₁ to C₃ linear alkyl group.

8. The method of claim 7, wherein the negative charge property-improving coating agent includes 0.010 to 0.200 wt% of the sulfonic acid-containing amine compound represented by Formula 1, and water as the remainder among the total wt%.

9. A membrane module comprising the water treatment membrane of any one of claims 1 to 6.

10. A household water purifier comprising the membrane module of claim 9.
